# EUROPÄISCHE PATENTSCHRIFT

(11) **EP 1 298 851 B1**
(45) Veröffentlichungstag und Bekanntmachung des Hinweises auf die Patenterteilung: **30.05.2007**
(21) Anmeldenummer: 01123021.6
(22) Anmeldetag: 26.09.2001
(51) Int. Cl.: H04L 12/403, H04L 29/12

(54) **Verfahren zur Adressierung der Teilnehmer eines Bussystems**
Method of addressing nodes of a bus system
Procédé d'adressage de noeuds d'un système de bus

(43) Veröffentlichungstag der Anmeldung: 02.04.2003
(73) Patentinhaber: ELMOS Semiconductor AG, 44227 Dortmund (DE)
(72) Erfinder: Hartzsch, Jörg, 44287 Dortmund (DE)
(74) Vertreter: Hilleringmann, Jochen

(56) Entgegenhaltungen:
- EP-A- 0 854 609
- EP-A- 0 855 817
- DE-C- 4 038 992

## Beschreibung

Die Erfindung betrifft ein Verfahren zur Adressierung der Teilnehmer eines Bussystems mit einer Steuereinheit, einem von der Steuereinheit ausgehenden Bus und mehreren Teilnehmern, die aufeinander folgend an den Bus angeschlossen sind.

Um den Verdrahtungsaufwand beispielsweise im Kfz zu minimieren, geht man dazu über, die Steuersignale zum Ansteuern von Stellgliedern über einen Bus zu versenden, an dem neben einer Steuereinheit auch die Ansteuereinheiten für die Stellantriebsvorrichtungen der einzelnen Teilnehmer angeschlossen sind. Zu einem Bussystem zusammengefasst sind beispielsweise die Stellantriebsvorrichtungen einer Fahrzeug-Klimaanlage, der Fensterheber oder der vorderen Fahrzeugsitze. Damit die Steuereinheit selektiv ein oder mehrere Stellantriebe ansteuern kann, sind diesen Adressen zugeordnet. Bisher werden den Teilnehmern ihre Adressen, z.B. durch Programmierung eingespeichert oder durch Steck- oder PIN-Kodierung zugeordnet. Während das Programmieren bei der Fertigung eines Fahrzeugs noch relativ unproblematisch ist, erfordert dies dann, wenn der gesamte Teilnehmer, das heißt die Stellantriebsvorrichtung mit Ansteuerung, beispielsweise in einer Werkstatt ausgetauscht wird, insoweit einen erhöhten Aufwand. Ferner besteht bezüglich der Logistik das Erfordernis der Einhaltung definierter Bestückungsreihenfolgen mit der damit verbundenen Serviceunfreundlichkeit bzw. der Lieferung vorprogrammierter (voradressierter) Bauteile, was dem Gleichteileprinzip zuwiderläuft. Außerdem kann es bei der Steckerkodierung zu Funktionsstörungen kommen. Schließlich ist es auch möglich, die Selbstadressierung der Teilnehmer eines Bussystems über Schalter zum seriellen Trennen der Bus-Verbindungen zwischen den Teilnehmern zu realisieren. Hier sind also Nachteile insbesondere die elektrische Auftrennung der Bus-Leitung über aktive Bauelemente und der hohe Flächenbedarf für Bussysteme mit vielen Teilnehmern zu nennen.

Automatisierte Adressvergabeverfahren für Bussysteme sind aus EP-A-0 854 609, DE-A-196 47 668, DE-C-44 04 962, DE-A-44 28 502, WO-A-97/45983 und DE-A-197 56 564 bekannt.

Aus DE-C-40 38 992 schließlich ist ein Verfahren bekannt, bei dem die Adressen der Komponenten einer Gefahrenmeldeanlage automatisch zugeordnet werden. Die Adressierung erfolgt dabei ausgehend von dem zur Zentrale nächstgelegenen Teilnehmer bis zu dem von der Zentrale am entferntesten angeordneten Teilnehmer. Jeder Teilnehmer weist dabei in jeder der beiden Adern einer Meldeprimärleitung jeweils einen Widerstand und zwischen den beiden Adern mehrere elektrische und elektronische Bauteile auf. Ferner ist jeder Teilnehmer mit einem Kurzschlussschalter versehen, um die beiden Adern kurzzuschließen. Bei kurzgeschlossenem Schalter kann der sich über die beiden zuvor genannten Widerstände ergebende Spannungsabfall (bei Aufprägung eines Messstroms auf der Meldeprimärleitung) messtechnisch ermittelt werden. Sämtliche dieser Teilnehmer sind seriell in der Meldeprimärleitung angeordnet.

Zu Beginn der Adressierung sendet eine Zentralsteuereinheit ein Kurzschlusssignal zum Schließen der Kurzschlussschalter sämtlicher noch nicht adressierter Teilnehmer aus. Im Anschluss daran wird ein Messstrom aufgeprägt, der in dem von der Zentrale aus betrachtet ersten (also in dem zur Zentrale nächst angeordneten) Teilnehmer der Gruppe noch nicht adressierter Teilnehmer einen Spannungsabfall hervorrufen soll. Anschließend wird auf die Meldeprimärleitung ein Adressdatensignal gelegt. Derjenige Teilnehmer, dem noch keine Adresse zugeordnet worden ist und der zuvor einen Spannungsabfall detektiert hat, übernimmt dieses Adressdatensignal in seinen Adressspeicher. Anschließend erfolgt zur weiteren Adressierung wiederum die Vergabe des Kurzschlusssignals, wobei der Kurzschlussschalter des zuvor adressierten Teilnehmers nicht geschlossen wird, sondern vielmehr die Kurzschlussschalter sämtlicher bis dahin noch nicht adressierter Teilnehmer angesprochen werden. Beim Aufprägen des Messstroms erzeugt dieser dann in dem nunmehr zur Zentralsteuereinheit am nächsten angeordneten Teilnehmer der Gruppe aus noch nicht adressierten Teilnehmern einen zu detektierenden Spannungsabfall, so dass dieser Teilnehmer in der nächsten Phase, in der auf die Meldeprimärleitung wiederum ein Adressdatensignal gelegt wird, diese Adresse in seinem Adressspeicher ablegt und somit ebenfalls adressiert ist. Dieses Verfahren wird fortgesetzt, bis der letzte Teilnehmer adressiert ist.

Bei diesem bekannten Verfahren wird idealisiert davon ausgegangen, dass auf Grund des Kurzschlusses der beiden Adern der Meldeprimärleitung der gesamte Messstrom über den Kurzschlussschalter des am nächsten zur Zentralsteuereinheit angeordneten Teilnehmer der Gruppe aus noch nicht adressierten Teilnehmern fließt. In der Praxis weisen elektronische Schalter, wie sie gemäß dem bekannten Verfahren als Kurzschlussschalter eingesetzt werden, jedoch einen nicht zu vernachlässigenden Ein-Widerstand auf. Mithin fließt also auch ein Teil des Messstroms über den Kurzschlussschalter des benachbarten noch nicht adressierten Teilnehmers und erzeugt über dessen Widerständen ebenfalls einen Spannungsabfall. Es ist also erforderlich, nicht nur den Umstand, dass ein Spannungsabfall detektiert ist, zu erfassen, sondern auch die Größe dieses Spannungsabfalls zu detektieren. Darüber hinaus ist zu bedenken, dass je weiter ein noch nicht adressierter Teilnehmer von der Zentralsteuereinheit angeordnet ist, der Messstrom und damit der detektierbare Spannungsabfall sich verringert, was allein schon daran liegt, dass der Messstrom, der über den geschlossenen Kurzschlussschalter eines relativ weit von der Zentralsteuereinheit angeordneten Teilnehmers über die in den Adern der Meldeprimärleitung angeordneten Widerstände der diesem Teilnehmer vorgeschalteten, bereits adressierten Teilnehmer fließen muss. Die Auswertung und die zuverlässige Detektierung der Spannungsabfälle bei dem bekannten Verfahren ist also nicht trivial, was schaltungstechnischen und Programmieraufwand mit sich bringt.

Der Erfindung liegt die Aufgabe zu Grunde, die Adressierung der Teilnehmer eines Bussystems weiter zu vereinfachen.

Zur Lösung dieser Aufgabe wird mit der Erfindung ein Verfahren zum Adressierung der Teilnehmer eines Bussystems gemäß Anspruch 1 vorgeschlagen.

Bei dem erfindungsgemäßen Verfahren ist vorgesehen, dass
- die Ansteuereinheiten sämtlicher Teilnehmer der Gruppe noch nicht adressierter Teilnehmer die Schalter für eine vorgebbare Einschaltzeitspanne einschalten,
- innerhalb der Einschaltzeitspanne die Schalter derjenigen Teilnehmer geöffnet werden, deren Detektoren einen Stromfluss zu dem jeweils benachbarten Teilnehmer detektieren,
- wobei der Schalter eines der Teilnehmer bei Ablauf der Einschaltzeitspanne noch geöffnet ist und
- wobei in dem Adressspeicher dieses Teilnehmers eine Adresse abgelegt wird und dieser Teilnehmer somit adressiert ist.

Wenn man einmal von dem Fall ausgeht, dass noch kein Teilnehmer adressiert ist, so wird für die Adressierung eines ersten Teilnehmers so verfahren, dass z.B. eine Zentralsteuereinheit in einer ersten Phase auf die Busleitung ein Schließsignal zum zeitlich begrenzten Schließen der Schalter sämtlicher Teilnehmer für eine Maximal-Einschaltzeitspanne legt. Auf Grund dieses Schließsignals halten also sämtliche Teilnehmer ihre Schalter, über die in jedem Teilnehmer eine Verbindung der Busleitung mit einem Referenzpotential (z.B. Massepotential) hergestellt wird, geschlossen.

Anschließend wird von der Zentralsteuereinheit in einer zweiten Phase auf die Busleitung ein Spannungsabfallsignal gelegt, bei dem es sich beispielsweise um einen aufgeprägten (Mess-)Strom handelt. Die Schalter der Teilnehmer weisen einen gewissen Ein-Widerstand auf, der relativ klein ist. Auch der Widerstandswert der in die Busleitung geschalteten Shunt-Widerstände ist relativ klein. Das bedeutet, dass sich der Messstrom im zur Zentralsteuereinheit nächst gelegenen Teilnehmer auf dessen Schalter und auf den diesem Teilnehmer zugeordneten Shunt-Widerstand der Busleitung aufteilt. Mit anderen Worten fließt also ein Teil des Messstroms auch über den Shunt-Widerstand, an dem ein Spannungsabfall entsteht, der vom Komparator mit einer Referenzspannung verglichen wird. Übersteigt der Spannungsabfall diese Referenzspannung, so wird der Schalter dieses Teilnehmers geöffnet, und zwar vor Ablauf der Maximal-Einschaltspanne.

Bei der Erfindung wird also ganz bewusst davon ausgegangen, dass der Messstrom sowohl über den Schalter als auch über den Shunt-Widerstand des zur Zentralsteuereinheit nächst gelegenen noch nicht adressierten Teilnehmers fließt. Es ist sogar davon auszugehen, dass ein Teil des Messstromes auch durch die Shunt-Widerstände der nächsten Teilnehmer fließt und dort zu noch messbaren Spannungsabfällen führt. Diese Spannungsabfälle werden aber sicherlich ab dem dritten oder vierten durchflossenen Shunt-Widerstand der Busleitung derart gering sein, dass man sie qualitativ nicht mehr zuverlässig auswerten kann.

Dieser Umstand ist aber bei dem erfindungsgemäßen Adressierverfahren nicht schädlich. Denn in dem Augenblick, in dem der zur Zentralsteuereinheit nächst gelegene Teilnehmer an dem ihm zugeordneten Shunt-Widerstand der Busleitung einen über dem Referenzwert liegenden Spannungsabfall detektiert, wird der Schalter dieses Teilnehmers geöffnet. Damit fließt kein Messstrom mehr über diesen Teilnehmer ab; vielmehr fließt der gesamte Messstrom bis zum zweiten Teilnehmer, also bis zu demjenigen Teilnehmer, der ohne Berücksichtigung des Teilnehmers mit geöffnetem Schalter nunmehr zur Zentratsteuereinheit am nächsten angeordnet ist. Hier kommt es dann zur Verzweigung des Messstroms in der zuvor beschriebenen Weise und damit zu einer sicheren Detektion eines Spannungsabfalls, der größer ist als der Referenzwert. Demzufolge öffnet auch der Schalter dieses Teilnehmers.

In der oben beschriebenen Weise läuft das Verfahren dann automatisch ab, bis nur noch der Schalter des letzten Teilnehmers geschlossen ist. Da hinter diesem letzten Teilnehmer die Busleitung endet, fließt auch kein Strom durch den diesem letzten Teilnehmer zugeordneten Shunt-Widerstand. Mithin detektiert dieser letzte Teilnehmer keinen Spannungsabfall. Damit öffnet sich der Schalter dieses letzten Teilnehmers nicht, so dass er auch noch bei Ablauf der Maximal-Einschaltzeitspanne geschlossen ist.

Nach Ablauf der Maximal-Einschaltzeitspanne ist also der Schalter exakt eines Teilnehmers, nämlich des am weitesten von der Zentralsteuereinheit entfernt angeordneten Teilnehmers der Gruppe noch nicht adressierter Teilnehmer noch geschlossen. In einer anschließenden dritten Phase überträgt nun die Zentralsteuereinheit eine Adresse über die Busleitung, die dann dem noch nicht adressierten Teilnehmer mit bei Ablauf der Maximal-Einschaltzeitspanne noch geschlossenem Schalter zugeteilt wird. Dieser Teilnehmer speichert die Adressdaten in seinem Adressspeicher ab und nimmt von da an am weiteren Adressvergabeverfahren nicht mehr teil.

Wie man der obigen Beschreibung entnehmen kann, muss dem am Ende der Busleitung angeordneten Teilnehmer des Bussystems nicht notwendigerweise ein Shunt-Widerstand zugeordnet sein. Denn unabhängig davon, ob dieser Shunt-Widerstand vorhanden ist, wird im letzten Teilnehmer kein Spannungsabfall detektiert werden können.

Nachdem auf die oben beschriebene Art und Weise ein erster Teilnehmer (nämlich der am weitesten von der Zentralsteuereinheit angeordnete Teilnehmer) adressiert ist, wird mit den übrigen nicht adressierten Teilnehmern in gleicher Weise verfahren. Während eines nächsten Adressvergabezyklus werden also die Schalter sämtlicher noch nicht adressierter Teilnehmer geschlossen, woraufhin die Zentralsteuereinheit wiederum ein Signal zur Erzeugung von Spannungsabfällen über den Shunt-Widerständen auf die Busleitung legt. Da der Schalter des während des ersten Adressvergabezyklus adressierten letzten Teilnehmers nunmehr während der Maximal-Einschaltzeitspanne stets geöffnet ist, wird durch den dem vorletzten Teilnehmer zugeordneten Shunt-Widerstand der Busleitung nicht Strom durchflossen, so dass über ihm auch kein Spannungsabfall zu detektieren ist. Mithin verhält sich der vorletzte Teilnehmer genau so wie ein am Ende der Busleitung angeordneter Teilnehmer. Mit Ausnahme des vorletzten Teilnehmers werden also während der Maximal-Einschaltzeitspanne auf die zuvor beschriebene Art und Weise sämtliche Schalter auf Grund der Detektion eines Spannungsabfalls über den jeweils zugeordneten Shunt-Widerständen geöffnet, so dass bei Ablauf der Maximal-Einschaltzeitspanne lediglich noch ein Teilnehmer (in diesem Fall der vorletzte) über einen noch nicht ausgeschalteten Schalter verfügt. Mithin kann die Zentralsteuereinheit nunmehr wiederum diesem Teilnehmer eindeutig eine Adresse zuteilen.

Auf die oben beschriebene Weise wird nun weiter verfahren, bis auch der letzte Teilnehmer der Gruppe noch nicht adressierter Teilnehmer, d.h. der zur Zentralsteuereinheit nächst gelegene Teilnehmer adressiert ist.

Zur zeitlichen Optimierung des Adressvergabeverfahrens ist es zweckmäßig, wenn die Maximal-Einschaltzeitspanne von Adressierzyklus zur Adressierzyklus verkürzt wird. Denn die Zeitdauer, die bei einer großen Zahl noch nicht adressierter Teilnehmer erforderlich ist, um den einen zu adressierenden Teilnehmer (nämlich denjenigen mit bei Ablauf der Maximal-Einschaltzeitspanne noch geschlossenen Schalter) zu bestimmen, ist (wesentlich) größer als beispielsweise in dem Fall, in dem nur noch ein einziger Teilnehmer zu adressieren ist. Mithin kann also auch die Einschaltzeitspanne zur Zeitoptimierung des erfindungsgemäßen Adressierverfahrens zweckmäßigerweise von Teilnehmeradressierung zu Teilnehmeradressierung reduziert werden.

Die Vorteile des erfindungsgemäßen Verfahrens sind darin zu sehen, dass das bezüglich der Herstellung und der Wartung sowie Reparatur zweckmäßige Gleichteileprinzip genutzt werden kann. Ferner entfällt eine Steckerkodierung mit den dieser inhärenten Nachteile bezüglich der Gefahr des Funktionsausfalls. Schließlich wird die Busleitung nicht aufgetrennt, was Timing-Probleme und das Erfordernis der Verwendung aktiver Bauelemente ausschaltet. Ferner ist ein erfindungsgemäße adressiertes Bussystem jederzeit reinitialisierbar, was service- und diagnosefreundlich ist. Schließlich ist das Bussystem kostengünstig realisierbar, wobei ein Verzicht auf einen nicht flüchtigen Speicher (Adressspeicher) möglich ist, da sich das System bei jedem Power-Up (Einschalten) selbst initialisieren lässt. Eine Selbstinitialisierung der Teilnehmer nach Power-On ist möglich, und zwar ohne Organisation der Teilnehmer durch die Zentralsteuereinheit. Der Vorteil hiervon ist darin zu sehen, dass zur Initialisierung keine Software-Entwicklung notwendig ist.

Die Integration der Shunt-Widerstände erfolgt zweckmäßigerweise über eine Schneidklemm-Verbindung, über die jeder Teilnehmer die Busleitung doppelt abgreift. Zwischen den beiden Abgriffen der Schneidklemm-Verbindung wird die Busleitung mittels eines Schneidklemm-Werkzeuges gekappt und entweder ein Isolator oder der Shunt-Widerstand eingepresst. Im zuerst genannten Fall befindet sich der Shunt-Widerstand in der Teilnehmereinheit, die über zwei Leitungen mit ihren Nachbar-Teilnehmern verbunden ist. Bei diesem Ausführungsbeispiel erstreckt sich die Busleitung sozusagen durch die Teilnehmer hindurch. Der Widerstand wird dann bei der Herstellung der Schneidklemm-Verbindung direkt in die Busleitung eingepresst, wenn der Teilnehmer über einen Busstecker mit der Busleitung verbunden ist. Die zuvor genannte erste Möglichkeit bietet den Vorteil, den Shunt-Widerstand kostengünstig im ASIC, das unter anderem den Komparator, den Schalter und die Ansteuereinheit für den Schalter beinhaltet, integrieren zu können.

Bei dem erfindungsgemäßen Verfahren zum Adressieren der Teilnehmer eines Bussystems wird also von jedem Teilnehmer die Busleitung "auf Masse" gelegt, wobei auf Grund des endlichen Widerstandes des den Bus auf Masse legenden Schalters durch einen dem Teilnehmer zugeordneten Shunt-Widerstand der Busleitung noch ein Strom fließt, der einen Spannungsabfall erzeugt. Wenn der Teilnehmer diesen Spannungsabfall detektiert, schaltet er seinen Schalter aus. Dieser Vorgang spielt sich sequenziell bzw. innerhalb einer Gruppe von Teilnehmern quasi parallel und von Gruppe zu Gruppe sequenziell ab, bis der letzte Teilnehmer erreicht ist. Durch den diesem Teilnehmer zugeordneten Shunt-Widerstand fließt in jedem Fall kein Strom, so dass nach Ablauf einer vorgebbaren Einschaltzeitspanne der Schalter dieses Teilnehmers noch geöffnet ist. Damit ist einer der Teilnehmer aus der Gruppe sämtlicher Teilnehmer spezifiziert, so dass diesem Teilnehmer nunmehr eine Adresse zuteil werden kann. Während weiterer Adressierzyklen wird nun auf die gleiche Weise mit den übrigen Teilnehmern verfahren, wobei der Schalter des bereits adressierten Teilnehmers stets offen bleibt.

Das erfindungsgemäße Verfahren wurde vorstehend anhand der Realisierung der Detektoren durch Shunt-Widerstände erläutert. Allgemeiner ausgedrückt wird bei dem erfindungsgemäßen Adressvergabeverfahren mit Hilfe von Stromdurchflussdetektoren ermittelt, ob zwischen jeweils benachbarten Teilnehmern ein Stromfluss erfolgt. Wird mittels des Detektors eines Teilnehmers erkannt, dass von diesem Teilnehmer zum nächsten Teilnehmer ein Strom fließt, so wird der zuvor geschlossene Schalter des Teilnehmers, dessen Detektor angesprochen hat, geöffnet. Im Anschluss daran stellt dann der Detektor des nächsten Teilnehmers fest, ob zu dem ihm benachbarten nächsten Teilnehmer ein Strom fließt. Wird auch dies detektiert, so wiederholt sich der zuvor beschriebene Vorgang. Auf diese Art und Weise öffnen sich also die Schalter sämtlicher Teilnehmer bis auf den des letzten Teilnehmers, da hinter diesem letzten Teilnehmer kein weiterer Teilnehmer angeordnet ist und demzufolge auch kein Stromfluss detektiert werden kann. Somit ist dieser letzte Teilnehmer individualisiert bestimmbar, so dass eine nunmehr auf den Bus gelegte Adresse diesem letzten Teilnehmer zugeordnet werden kann. Im folgenden Adressvergabezyklus bleibt der Schalter dieses Teilnehmers geöffnet, so dass sich nun der vorletzte Teilnehmer schaltungstechnisch so wie der letzte Teilnehmer beim ersten Adressvergabezyklus verhält. Dieses Verfahren wird fortgesetzt, bis sämtliche Teilnehmer adressiert sind.

Die Detektoren können in der Busleitung in Reihe geschaltet sein, wobei die zum Referenzpotential führende und mit dem Schalter versehene Verbindungsleitung eines jeden Teilnehmers von der Zentralsteuereinheit aus betrachtet vor dem Detektor des betreffenden Teilnehmers mit der Busleitung verbunden ist.

Alternativ zu diesem Buskonzept kann in jeder von der Busleitung abzweigenden und mit dem Schalter versehenen sowie zum Referenzpotential führenden Abzweigleitung ein Detektor und ein Schalter angeordnet sein. Der Detektor und der Schalter sind dabei zwei unterschiedlichen benachbarten Teilnehmern zugeordnet, wobei der Schalter dem bezogen auf die Zentraleinheit weiter entfernt angeordneten der beiden Teilnehmer zugeordnet ist. Über diese Verbindungsleitung fließt dann also bei geschlossenem Schalter ein Strom, der demzufolge von dem näher zur Zentralsteuereinheit angeordneten der beiden Teilnehmer detektiert wird. Auf diese Weise wird ebenfalls nach dem zuvor beschriebenen Schema die Adressvergabe durchgeführt.

Für die Realisierung der Detektoren ist letztendlich jedes Konzept denkbar, das zu einer Stromdetektion führt. Beispielsweise wird zur Stromdetektion ein Shunt-Widerstand eingesetzt, dessen Spannungsabfall in einem Komparator mit einem Referenzwert verglichen wird. Ist der Spannungsabfall größer als der Referenzwert, so wird Stromfluss angezeigt. Sollte der Spannungsabfall kleiner als der Referenzwert sein, so wird dies als Nichtstromfluss gewertet. Vor dem Vergleich im Komparator kann der gemessene Spannungsabfall noch mittels eines Verstärkers verstärkt werden. Schließlich ist es auch möglich, dem Shunt-Widerstand einen Analog/Digital-Wandler nachzuschalten. In diesem Fall handelt es sich bei dem Komparator um einen Digital-Komparator, der auch softwaremäßig realisiert sein kann.

Das erfindungsgemäße Adressvergabeverfahren kann in gleicher Weise auch bei Bussystemen eingesetzt werden, die keine Zentralsteuereinheit im zuvor genannten Sinne aufweisen.

Bei dieser Variante der Erfindung überführen die Ansteuereinheiten sämtlicher Teilnehmer die diesen zugeordneten Schalter in den Ein-Zustand, in dem sie maximal für die Dauer der Einschaltzeitspanne verbleiben. So lange nicht sämtliche Schalter geschlossen sind, wird dies von den Teilnehmern an dem auf den Bus geführten Potenzial erkannt. Erst wenn die Schalter sämtlicher Teilnehmer geschlossen sind, führt der Bus das Referenzpotential. Nun detektieren die Teilnehmer, ob zwischen jeweils benachbarten Teilnehmern ein Stromfluss existiert. Ist dies der Fall, so öffnen sich die jeweiligen Schalter, wie oben beschrieben ist. Wiederum derjenige Teilnehmer, der am Ende der Busleitung angeschlossen ist, wird keinen Stromdurchfluss detektieren, da hinter diesem Teilnehmer kein weiterer Teilnehmer existiert. Demzufolge ist der Schalter dieses Teilnehmers bei Ablauf der Einschaltzeitspanne noch geschlossen. Dieser Teilnehmer weist sich nun sozusagen selbst eine Adresse zu, wobei den übrigen Teilnehmern mitgeteilt wird, dass diese Adresse für den zuvor spezifizierten Teilnehmer vergeben wurde.

Das zuvor beschriebene Prozedere wiederholt sich, wobei der Schalter eines adressierten Teilnehmers geöffnet bleibt. Auf diese Weise lassen sich wiederum ohne Zentralsteuereinheit sämtliche Teilnehmer des Bussystems adressieren, was die Teilnehmer sozusagen von sich aus durchführen.

Zweckmäßigerweise kann diese Art der Adressenvergabe bei Bussystemen mit ein oder mehreren Steuereinheiten auf Initiative mindestens einer dieser Zentralsteuereinheit erfolgen.

Zur Synchronisation der in jedem Teilnehmer ablaufenden Zeitsteuerung, die mit dem Schließen der Schalter für maximal die Dauer der Einschaltzeitspanne beginnt, kann zweckmäßigerweise derart verfahren werden, dass auf ein Ereignis hin, das eine neue Autoadressierung erforderlich macht (z.B. Power-Up-Signal), zunächst innerhalb einer vorgebbaren Zeitspanne die Schalter sämtlicher Teilnehmer geschlossen werden. Da das Power-Up-Verhalten der einzelnen Teilnehmer zeitlich stark differieren kann, muss diese Zeitspanne so gewählt werden, dass zuverlässig sämtliche Schalter geschlossen sind. Nach Ablauf dieser Zeitspanne, was in jedem Teilnehmer überwacht wird, öffnen die Schalter der einzelnen Teilnehmer wieder. Anhand des auf der Busleitung liegenden Potentials kann ermittelt werden, wann der letzte Schalter geöffnet wird; denn erst danach weist die Busleitung nicht mehr das Referenzpotential auf, mit dem die Busleitung dann, wenn ein oder mehrere Schalter geschlossen sind, verbunden ist. Der Zeitpunkt des Öffnens des letzten Schalters ist dann der Ausgangszeitpunkt für die Adressvergabe, die dann, wie oben beschrieben, abläuft.

Die Erfindung wird nachfolgend anhand eines in der Zeichnung dargestellten Ausführungsbeispiels näher erläutert. Im einzelnen zeigen:
- Fig. 1: schematisch den Aufbau eines erfindungsgemäß automatisch adressierbaren Bussystems,
- Fign. 2 bis 12: die Schaltzustände der Schalter der einzelnen Teilnehmer des Bussystems zur verschiedenen Zeitpunkten der Adressierung und
- Fig. 13: schematisch den Aufbau eines anderen erfindungsgemäß automatisch adressierbaren Bussystems.

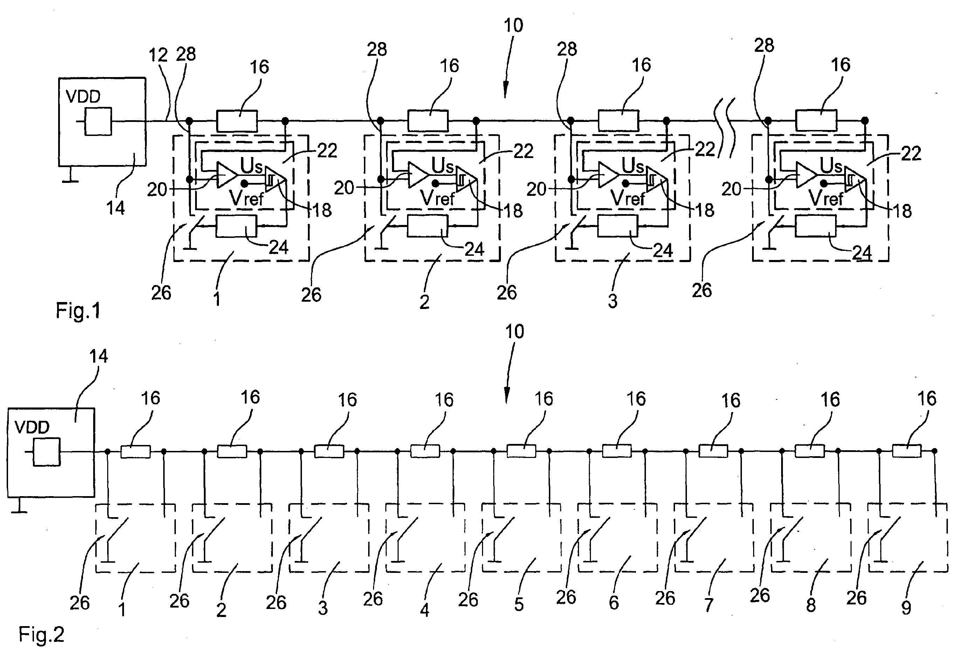

Fig. 1 zeigt stark vereinfacht den Aufbau eines Bussystems, das neun Teilnehmer 1 bis 9 aufweist (in Fig. 1 sind nur drei dieser Teilnehmer gezeigt), die über eine Busleitung 12 mit einer Zentralsteuereinheit 14 verbunden sind. In der Busleitung 12 befinden sich mehrere Shunt-Widerstände 16, die in Reihe geschaltet sind. Die Teilnehmer 1 bis 9 sind vor und hinter jedem Shunt-Widerstand 16 mit der Busleitung 12 verbunden. Jeder Teilnehmer 1 bis 9 weist einen Komparator 18 auf, der den Spannungsabfall U_{S} über dem Shunt-Widerstand 16, gegebenenfalls mittels eines Verstärkers 20 verstärkt, mit einer Referenzspannung V_{ref} vergleicht. Der Verstärker 20 und der Komparator 18 stellen einen Detektor 22 dar, der einen relevanten Spannungsabfall über einem Shunt-Widerstand 16 und damit erkennt, ob durch die Busleitung 12 Strom von einem der Teilnehmer 1 bis 9 zu demjenigen benachbarten Teilnehmer fließt, der von der Zentralsteuereinheit 14 weiter beabstandet ist. Das Ausgangssignal des Komparators 18 wird auf eine Ansteuereinheit 24 gegeben, die einen elektronischen Schalter 26 steuert, der die vor dem zugehörigen Shunt-Widerstand gelegenen Busleitungsabgriff 28 des Teilnehmers mit Massepotential verbindet. Die Art der Verbindung mit Massepotential ist in Fig. 1 stark vereinfacht und schematisiert dargestellt und erfolgt in der Praxis über gegebenenfalls weitere hier nicht dargestellte Komponenten der Teilnehmer 1 bis 9 bzw. der Zentralsteuereinheit 14.

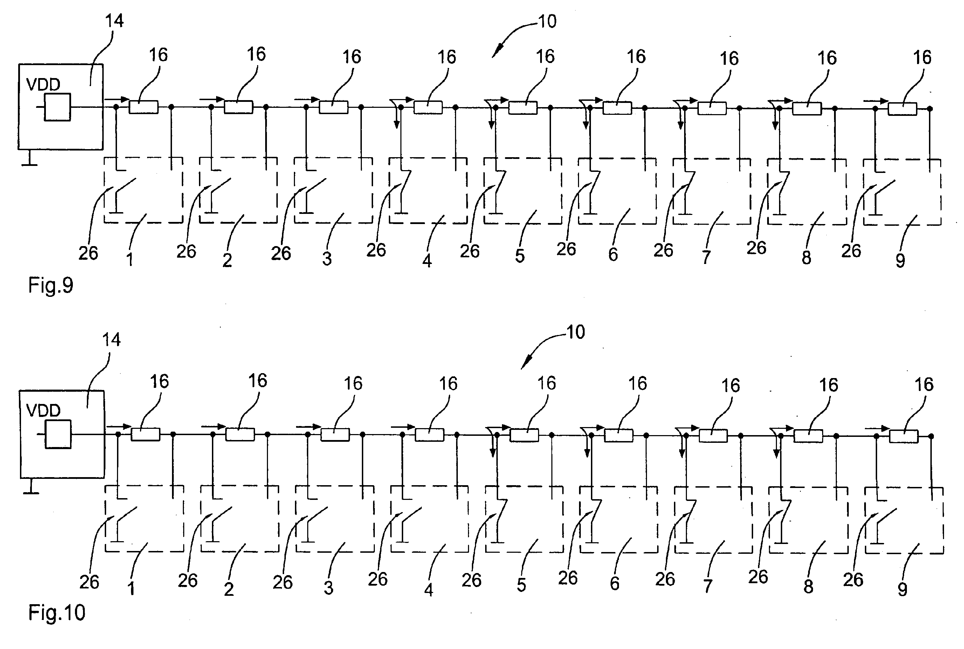

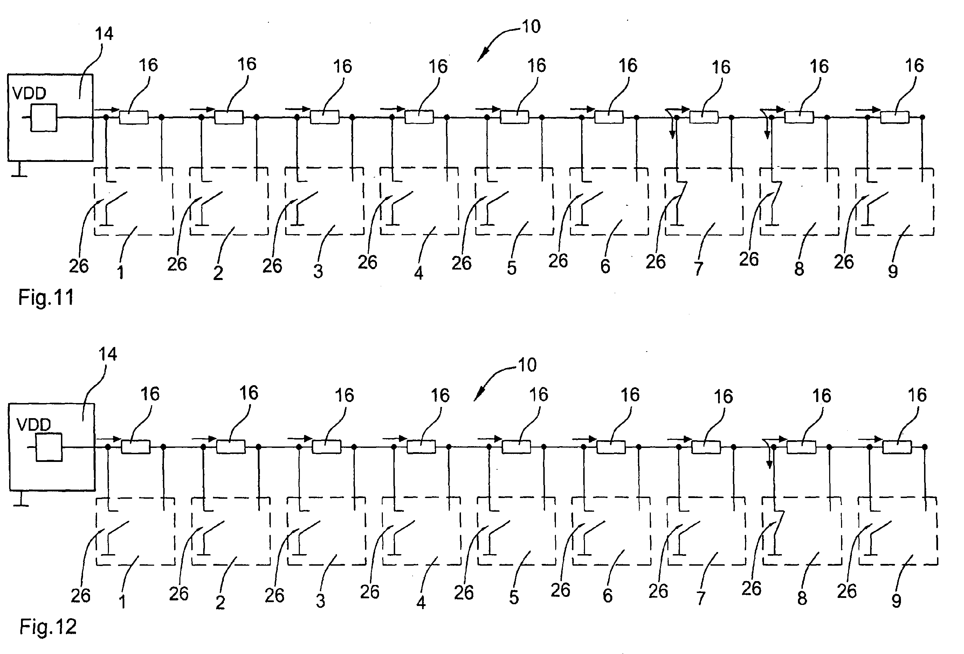

Für die Adressierung entscheidend ist die Steuerung der Schalter 26 der Teilnehmer 1 bis 9. Diese Schalter 26 werden zum einen in Abhängigkeit von der Ausgangssignale der Komparatoren 18 und zum anderen in Abhängigkeit von einem Steuerbefehl der Zentralsteuereinheit 14 sowie zeitgesteuert nach Ablauf eines Einschaltzeitspanne ein- bzw. aus-, umgeschaltet. Für die weiteren Betrachtungen betreffend den Ablauf des Adressierverfahrens sei auf die nochmals gegenüber Fig. 1 vereinfachten Darstellungen in den Fign. 2 bis 12 verwiesen, in denen die einzelnen Teilnehmer 1 bis 9 lediglich noch durch ihre Schalter und insbesondere durch die Stellung (Ein- oder Aus-Zustand) ihrer Schalter symbolisiert sind.

Ausgangspunkt der Adressierung ist, dass die Schalter 26 sämtlicher Teilnehmer 1 bis 9 ausgeschaltet sind, wie es in Fig. 2 gezeigt ist. Sämtliche Teilnehmer 1 bis 9 sind bisher noch nicht adressiert.

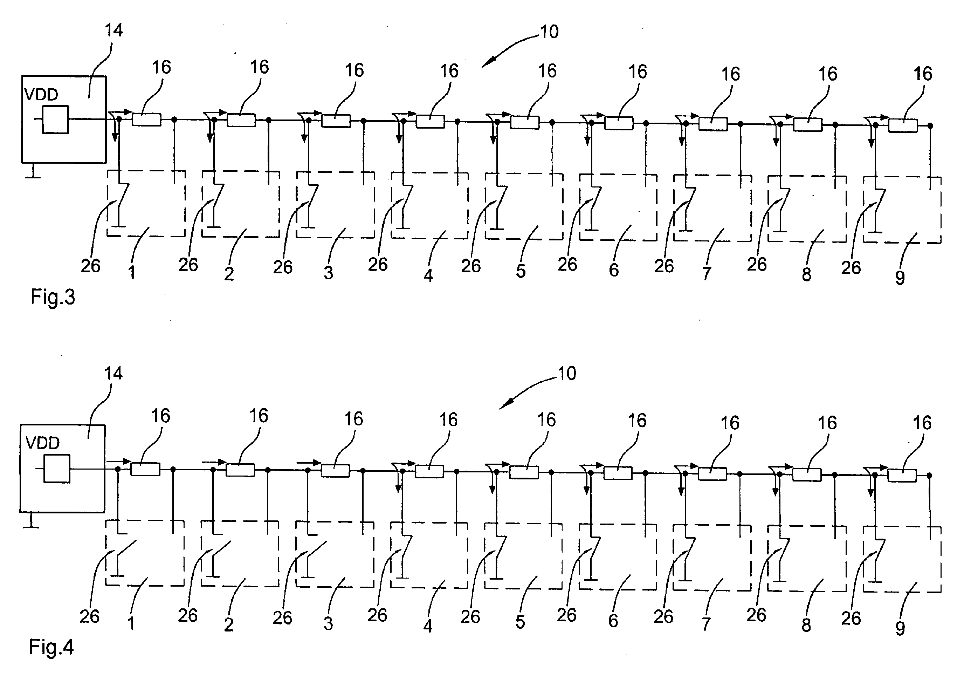

In einer ersten Phase der Selbstadressierung sendet die Zentralsteuereinheit 14 an sämtliche Teilnehmer 1 bis 9 ein Signal zum Einschalten der Schalter 26 aus. Daraufhin bleiben die Schalter 26 längstenfalls für eine Zeitspanne T eingeschaltet, und zwar zeitgesteuert durch die Ansteuereinheiten 24 der einzelnen Teilnehmer 1 bis 9. Die Situation, in der sämtliche Schalter 26 eingeschaltet sind, ist in Fig. 3 gezeigt.

Anschließend wird die Busleitung 12 von der Zentralsteuereinheit 14 mit einem Stromsignal beaufschlagt. Da die Schalter 26 einen endlichen Ein-Widerstand aufweisen, verzweigt sich der Strom an den Verbindungsstellen zwischen der Busleitung 12 und den Busleitungsabgriffen 28, wie in Fig. 3 durch die Pfeile gezeigt.

Insbesondere fließt also durch den Shunt-Widerstand 16 desjenigen Teilnehmers, der am nächsten zur Zentralsteuereinheit 14 angeordnet ist (im Ausführungsbeispiel ist dies der Teilnehmer 1), ein Strom, der zu einem detektierbaren Spannungsabfall U_{S} führt, welcher größer ist als der Referenzwert. Auch durch den Shunt-Widerstand 16 des von der Zentralsteuereinheit 14 aus betrachtet zweiten Teilnehmers 2 fließt ein Strom, der (noch) zu einem messbaren Spannungsabfall führt, der größer ist als der Referenzwert.

Unabhängig davon, ob bei geschlossenem Schalter 26 des Teilnehmers 1 durch den dem zweiten Teilnehmer 2 zugeordneten Shunt-Widerstand 16 noch ein zu einem messbaren Spannungsabfall führender Strom fließt, geschieht dies in jedem Fall dann, wenn der Schalter 26 des Teilnehmers 1 geöffnet wird. Das Öffnungssignal erhält der Schalter 26 des ersten Teilnehmers 1 von seiner Ansteuereinheit 24, die diese auf das Ausgangssignal des Komparators 18 hin ausgibt. Dieses Ausgangssignal besagt nämlich, dass ein relevanter Spannungsabfall an dem dem ersten Teilnehmer 1 zugeordneten Shunt-Widerstand 16 gemessen wurde, also ein Spannungsabfall gemessen wurde, der größer als der Referenzwert ist. In einem solchen Fall öffnet der Schalter 26 des entsprechenden Teilnehmers (in diesem Fall des Teilnehmers 1).

Kurz nach Beginn des Einspeisens des Stromsignals (zum Zeitpunkt t₁ < T) in die Busleitung 12 wird also der Schalter 26 des der Zentralsteuereinheit 14 nächst angeordneten Teilnehmers 1 öffnen. Diese Situation ist in Fig. 4 gezeigt.

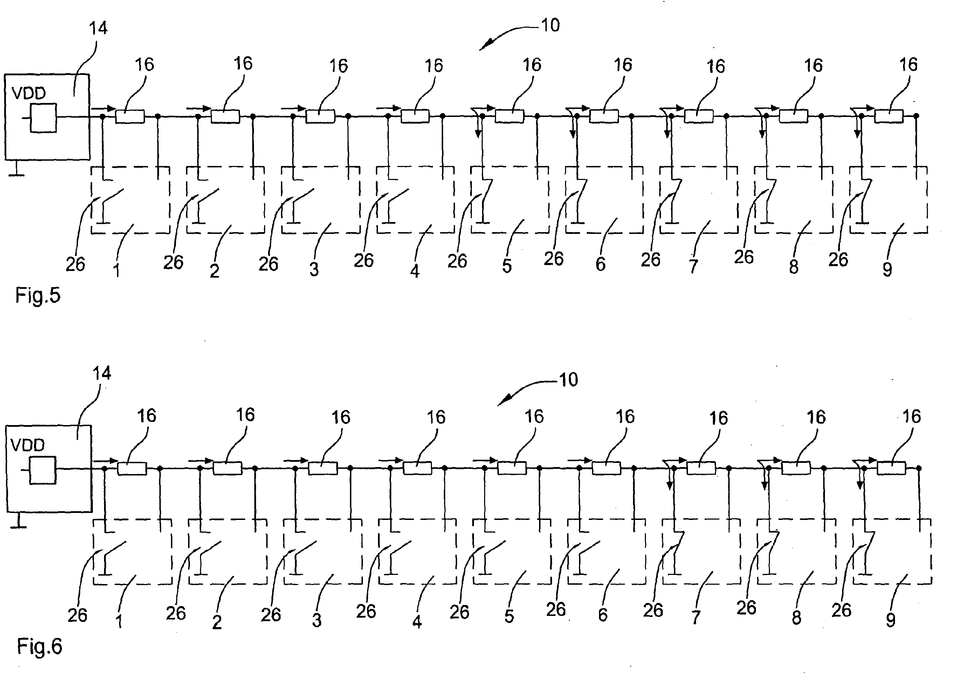

Sollte nicht schon bei geschlossenem Schalter 26 des ersten Teilnehmers 1 durch den dem zweiten Teilnehmer 2 zugeordneten Shunt-Widerstand ausreichend Strom geflossen sein, so dass ein relevanter Spannungsabfall detektierbar ist, so erfolgt dies spätestens bei ausgeschaltetem Schalter 26 des ersten Teilnehmers 1. Der soeben geschilderte Mechanismus und Steuerungsabfall wiederholt sich nun für den zweiten Teilnehmer 2, so dass zum Zeitpunkt t₂ < T auch dessen Schalter 26 öffnet, wie es in Fig. 5 gezeigt ist.

In der Praxis wird es wohl so sein, dass auf Grund der Ein-Widerstände der Schalter 26 die durch mehrere (im Ausführungsbeispiel drei) aufeinanderfolgende Shunt-Widerstände fließende Teilströme jeweils einen relevanten Spannungsabfall erzeugen, der in den jeweils aufeinander folgenden Teilnehmern zum Öffnen der Schalter 26 führt.

Auf die oben beschriebene Art und Weise zum Zeitpunkt t₃ < T (siehe Fig. 6) sind also dann mindestens die Schalter 26 der ersten drei Teilnehmer 1 bis 3 (von der Zentralsteuereinheit 14 aus betrachtet) eingeschaltet. Zusätzlich sind auch die Schalter 26 der nächstfolgenden Teilnehmer 4 bis 6 geöffnet, was jedoch von den oben genannten Randbedingungen abhängig ist (insbesondere Größe der Ein-Widerstände der Schalter 26).

Auf die zuvor beschriebene Weise öffnen schließlich die Schalter 26 sämtlicher Teilnehmer mit Ausnahme des letzten Teilnehmers 9. Dieser letzte Teilnehmer 9 wird nämlich in keinem Fall einen Spannungsabfall detektieren, da der ihm zugeordnete Shunt-Widerstand, weil am Ende der Busleitung 12 gelegen, nicht stromdurchflossen ist. So gesehen könnte man beim letzten Teilnehmer 9 auf den Shunt-Widerstand auch gänzlich verzichten.

Da dieser letzte Teilnehmer 9 keinen Spannungsabfall detektiert, wird sich auch sein Schalter 26 nach Ablauf der Zeitspanne zum Zeitpunkt tₙ > T noch im geschlossenen Zustand befinden, während alle anderen Schalter bereits geöffnet sind. Damit ist eine eindeutige Spezifizierung einer der Teilnehmer 1 bis 9 gegeben, so dass eine nunmehr von der Zentralsteuereinheit 14 auf die Busleitung 12 gelegte Adresse von einem der Teilnehmer, nämlich in diesem Fall dem Teilnehmer 9, d.h. dem Teilnehmer, dessen Schalter innerhalb der Einschaltzeitspanne T nicht auf Grund der Detektion eines Spannungsabfalls über einem Shunt-Widerstand geöffnet wurde, als seine Adresse übernommen wird. Diese Adresse wird in einem (in den Figuren nicht dargestellten) Adressspeicher des Teilnehmers 9 abgespeichert, der als Teil der Ansteuereinheit realisiert ist.

Auf die obige Art und Weise ist somit der erste Teilnehmer adressiert. Die Adressierung erfolgt von der Zentralsteuereinheit 14 aus betrachtet mit dem am entferntesten gelegenen noch nicht adressierten Teilnehmer (Teilnehmer 9 in diesem Ausführungsbeispiel und zu Beginn des Adressiervorgangs).

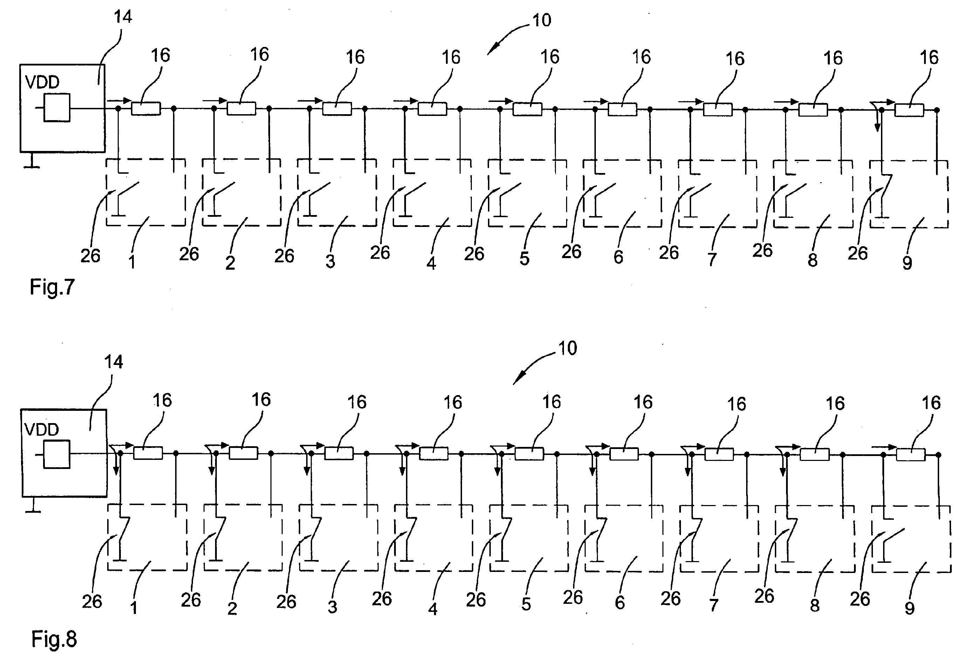

In einem zweiten Adressierzyklus wird nun der zweite Teilnehmer aus der Gruppe der noch nicht adressierten Teilnehmer 1 bis 8 adressiert. Die einzelnen Phasen dieses zweiten Adressierzyklus sind in den Fign. 8 bis 12 gezeigt und entsprechen im wesentlichen den einzelnen Phasen des ersten Adressierzyklus.

Innerhalb der Einschaltzeitspanne T öffnen die Teilnehmer 1 bis 7 ihre Schalter 26, da sie seriell oder gruppenweise gleichzeitig und seriell von Gruppe zu Gruppe einen relevanten Spannungsabfall über den ihnen zugeordneten Shunt-Widerständen 16 der Busleitung 12 detektieren. Der bereits adressierte Teilnehmer 9 ist in diesem Adressierzyklus nicht beteiligt, weshalb sein Schalter 26 stets offen ist, d.h. auch zu Beginn des Adressierzyklus nicht geschlossen wird. Damit verhält sich der vorletzte Teilnehmer 8 schaltungstechnisch so wie der physikalisch letzte Teilnehmer 9 während des ersten Adressierzyklus. Insbesondere detektiert der Teilnehmer 8 (der am weitesten von der Zentralsteuereinheit 14 entfernt angeordnete Teilnehmer) keinen Spannungsabfall über dem ihm zugeordneten Shunt-Widerstand 16; denn auf Grund des geöffneten Schalters 26 des letzten Teilnehmers 9 fließt durch den Shunt-Widerstand 16 des Teilnehmers 8 kein Strom. Somit ist also nach Ablauf der Einschaltzeit T der Teilnehmer 8 der einzige Teilnehmer, dessen Schalter 26 noch geschlossen ist. Eine nunmehr auf die Leitung 12 gelegte Adresse wird diesem Teilnehmer 8 zugeteilt, der sie in seinem Adressspeicher abspeichert.

Auf die zuvor beschriebene Weise wird nun während mehrerer Adressierzyklen mit jedem Teilnehmer verfahren, bis sämtliche Teilnehmer 1 bis 9 adressiert sind. Zu beachten ist, dass die Einschaltzeit T von Adressierzyklus zu Adressierzyklus variabel sein kann und verkürzt wird, um das Adressierverfahren zeitoptimal auszugestalten.

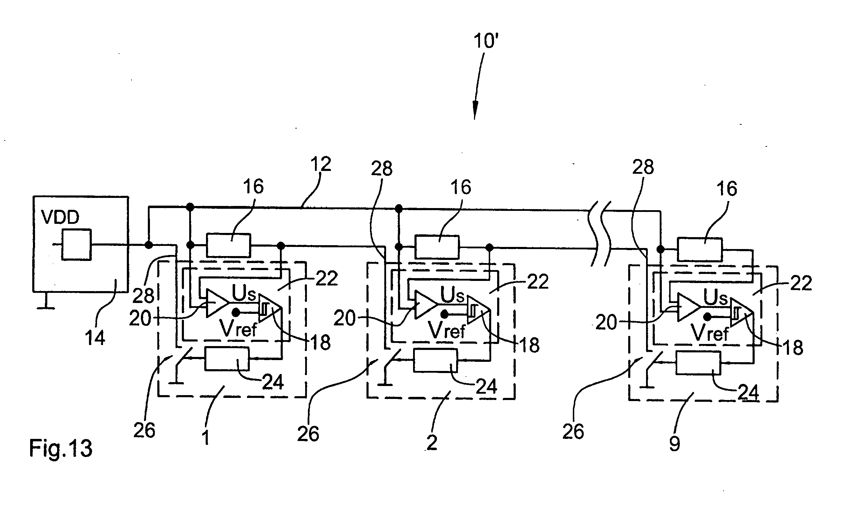

Den Aufbau eines alternativen Bussystems 10', das sich ebenso wie das Bussystem 10 gemäß Fig. 1 erfindungsgemäß automatisch adressieren lässt, zeigt schematisch Fig. 13. In dieser Fig. 13 sind funktionsgleiche Elemente mit den gleichen Bezugszeichen wie in Fig. 1 gekennzeichnet.

Der Unterschied der beiden Bussysteme 10 und 10' besteht darin, dass beim Bussystem 10' die Shunt-Widerstände 16 untereinander parallel geschaltet sind, und zwar in die Busleitungsabgriffleitungen 28, in denen auch die Schalter 26 angeordnet sind. In der Leitung 28 des zur Zentralsteuereinheit 14 nächst benachbarten Teilnehmers 1 ist kein Shunt-Widerstand 16 angeordnet. Ferner sind der Shunt-Widerstand 16 und der Schalter 26 einer Leitung 28 unterschiedlichen Teilnehmern zugeordnet. So ist der Shunt-Widerstand 16 dem einen dieser beiden Teilnehmer zugeordnet, während der Schalter 26 dem von der Zentralsteuereinheit 14 weiter weg angeordneten Teilnehmer dieser beiden Teilnehmer zugeordnet ist.

Auch bei dem Bussystem 10' geht es letztendlich darum, bei geschlossenen Schaltern 26 einen Stromfluss von einem Teilnehmer zum benachbarten Teilnehmer, der von der Zentralsteuereinheit 14 jedoch weiter weg angeordnet ist, zu detektieren. Sind nämlich in der ersten Phase der Adressvergabeprozedur sämtliche Schalter 26 des Bussystems 10' gemäß Fig. 13 geschlossen, so fließt auf Grund des endlichen Widerstandes der Schalter 26 im Ein-Zustand durch die Shunt-Widerstände 16 jeweils noch ein Strom. Der durch den dem Teilnehmer 1 zugeordneten Shunt-Widerstand 16 fließende Strom fließt zum Schalter 26 des Teilnehmers 2. Dieser Stromdurchfluss wird von dem Detektor 22 des Teilnehmers 1 erkannt, woraufhin dieser seinen Schalter 26 öffnet.

Auf gleiche Weise detektiert der Detektor 22 des Teilnehmers 2 einen Stromfluss zum (in Fig. 13 nicht gezeigten) Teilnehmer 3, d.h. dem Teilnehmer, der von der Zentralsteuereinheit 14 aus betrachtet hinter dem Teilnehmer 2 angeordnet ist. Damit öffnet auch der Schalter 26 des Teilnehmers 2.

Auf diese Art und Weise öffnen zeitgleich oder sequenziell sämtliche Schalter 26, mit Ausnahme jedoch des Schalters 26 des letzten Teilnehmers 9, da dessen Detektor 22 keinen Stromfluss wird detektieren können. Mithin ist also nach dem ersten Adressvergabezyklus der Teilnehmer 9 spezifiziert und kann adressiert werden. Im nächsten Adressvergabezyklus bleibt der Schalter 26 des Teilnehmers 9 stets geöffnet, so dass sich der von der Zentralsteuereinheit 14 aus betrachtet vor dem Teilnehmer 9 befindliche Teilnehmer (Teilnehmer 8 - in Fig. 13 nicht dargestellt) schaltungstechnisch wie der am Ende der Busleitung 10 befindliche letzte Teilnehmer verhält. Somit lässt sich in mehreren Adressvergabezyklen jeder Teilnehmer spezifizieren und adressieren.

## Patentansprüche

1. Verfahren zum Adressieren der Teilnehmer eines Bussystems, das versehen ist mit
- einer Busleitung (12),
- mehreren mit der Busleitung (12) verbundenen Teilnehmern (1 bis 9), von denen jeder einen Detektor (22) zum Detektieren eines Stromflusses zwischen diesem Teilnehmer (1 bis 9) und den zu diesen nächst benachbarten Teilnehmer (1 bis 9), einen steuerbaren Schalter (26) zum Aufbau einer Verbindung der Busleitung (12) mit einem Referenzpotential, einer Ansteuereinheit (24) zum Ein- und Ausschalten des Schalters (26) unter anderem auf der Basis des Ausgangssignals des Detektors (22) und einen Adressspeicher aufweist, wobei bei dem Verfahren
- die Ansteuereinheiten (24) sämtlicher Teilnehmer (1 bis 9) der Gruppe noch nicht adressierter Teilnehmer (1 bis 9) die Schalter (26) für eine vorgebbare Einschaltzeitspanne (T) einschalten,
- innerhalb der Einschaltzeitspanne (T) die Schalter (26) derjenigen Teilnehmer (1 bis 9) geöffnet werden, deren Detektoren (22) einen Stromfluss zu dem jeweils benachbarten Teilnehmer (1 bis 9) detektieren,
- wobei der Schalter (26) eines der Teilnehmer (1 bis 9) bei Ablauf der Einschaltzeitspanne (T) noch geschlossen ist und
- wobei in dem Adressspeicher dieses Teilnehmers (1 bis 9) eine Adresse abgelegt wird und dieser Teilnehmer (1 bis 9) somit adressiert ist.

2. Verfahren zum Adressieren der Teilnehmer eines Bussystems nach Anspruch 1, **dadurch gekennzeichnet, dass**
- von einer Zentralsteuereinheit (14) des Bussystems in einer ersten Phase auf die Busleitung (12) ein Schließsignal zum zeitlich begrenzten Schließen der Schalter (26) sämtlicher Teilnehmer (1 bis 9) der Gruppe noch nicht adressierter Teilnehmer (1 bis 9) für eine vorgebbare Einschaltzeitspanne (T) gelegt wird,
- in einer zweiten Phase durch die Detektoren (22) ermittelt wird, ob zwischen jeweils benachbarten Teilnehmern (1 bis 9) ein Strom fließt oder nicht, wobei
- innerhalb dieser zweiten Phase mit Ausnahme des am weitesten von der Zentralsteuereinheit (14) angeordneten Teilnehmer (9) der Gruppe von noch nicht adressierten Teilnehmern (1 bis 9) die Detektoren (22) sämtlicher noch nicht adressierter Teilnehmer (1 bis 9) einen Stromfluss zum jeweils weiter von der Zentralsteuereinheit (14) angeordneten, nächst benachbarten Teilnehmer (1 bis 9) detektieren, sowie demzufolge die Schalter (26) sämtlicher noch nicht adressierter Teilnehmer (1 bis 9) geöffnet werden und
- wobei der Detektor (22) des am weitesten von der Zentralsteuereinheit (14) angeordneten Teilnehmers (9) der Gruppe noch nicht adressierter Teilnehmer (1 bis 9) während der Einschaltzeitspanne (T) einen Stromfluss zu einem weiter von der Zentralsteuereinheit (14) angeordneten, nächst benachbarten Teilnehmer (1 bis 9) nicht detektiert und demzufolge der Schalter (26) dieses noch nicht adressierten Teilnehmers (9) bei Ablauf der Einschaltzeitspanne (T) immer noch geschlossen ist und erst nach Ablauf der Einschaltzeitspanne (T) geöffnet wird, und
- von der Zentralsteuereinheit (14) in einer dritten Phase ein Adressdatensignal auf die Busleitung (12) gelegt wird, wobei dieses Adressdatensignal in den Adressspeicher desjenigen Teilnehmers (9) aus der Gruppe noch nicht adressierter Teilnehmer (1 bis 9), dessen Schalter (26) auf Grund des Ablaufs der Einschaltzeit (T) in den geöffneten Zustand übergegangen ist, abgelegt wird und dieser Teilnehmer (9) somit adressiert ist.

3. Verfahren nach Anspruch 2, **dadurch gekennzeichnet, dass** für sämtliche Teilnehmer (1 bis 9) der Gruppe noch nicht adressierter Teilnehmer (1 bis 9) die Adressierung in mehreren Adresszyklen erfolgt.

4. Verfahren nach Anspruch 3, **dadurch gekennzeichnet, dass** die Einschaltzeitdauer (T) von Adresszyklus zu Adresszyklus verringert wird.

5. Verfahren nach Anspruch 1, **dadurch gekennzeichnet, dass** mit der Busleitung (12) ein oder mehrere Steuereinheiten (14) verbunden sind und dass mindestens eine dieser Steuereinheiten (14) das Schließen der Schalter (26) sämtlicher Teilnehmer (1 bis 9) der Gruppe noch nicht adressierter Teilnehmer (1 bis 9) initiiert.

6. Verfahren nach Anspruch 1 oder 5, **dadurch gekennzeichnet, dass** die Ansteuereinheiten (24) sämtlicher Teilnehmer (1 bis 9) zur Synchronisation des Schließens der Schalter (26) für die. Dauer der Einschaltzeitspanne (T) die Schalter (26) sämtlicher Teilnehmer (1 bis 9) innerhalb einer vorgebbaren Zeitspanne schließen und anschließend wieder öffnen, wobei das Öffnen des letzten Schalters (26) erkannt wird und dieser Zeitpunkt der Ausgangszeitpunkt für die Adressvergabe ist.

7. Verfahren nach einem der Ansprüche 1 bis 6, **dadurch gekennzeichnet, dass** die Detektoren (22) in Reihe in der Busleitung (12) geschaltet sind und dass der Schalter (26) eines jeden Teilnehmers (1 bis 9) in einer Verbindungsleitung (28) angeordnet ist, die von der Zentralsteuereinheit (14) aus betrachtet vor dem Detektor (22) dieses Teilnehmers (1 bis 9) von der Busleitung (12) abzweigt.

8. Verfahren nach einem der Ansprüche 1 bis 6, **dadurch gekennzeichnet, dass** die Detektoren (22) und die Schalter (26) seriell in von der Busleitung (12) abzweigenden Verbindungsleitungen (28) angeordnet sind und dass pro Verbindungsleitung der Detektor (22) und der Schalter (26) jeweils zweier benachbarter Teilnehmer (1 bis 9) angeordnet sind, wobei der Detektor (22) zu einem Teilnehmer (1 bis) und der Schalter zu dem von der Zentralsteuereinheit (14) weiter entfernt angeordneten Teilnehmer (1 bis 9) gehört.

9. Verfahren nach einem der Ansprüche 1 bis 8, **dadurch gekennzeichnet, dass** der am weitesten von der Zentralsteuereinheit (14) entfernt an der Busleitung (12) angeschlossene Teilnehmer (9) keinen Detektor aufweist.

10. Verfahren nach einem der Ansprüche 1 bis 9, **dadurch gekennzeichnet, dass** jeder Detektor einen Shunt-Widerstand (16) und einen Komparator (18) zum Vergleich des Spannungsabfalls (U_{S}) über den Shunt-Widerstand mit einem Referenzwert (V_{ref}) aufweist.

11. Verfahren nach Anspruch 10, **dadurch gekennzeichnet, dass** dem Komparator (18) ein Vorverstärker (20) zum Verstärken des Spannungsabfalls (U_{S}) vorgeschaltet ist.

12. Verfahren nach Anspruch 10 oder 11, **dadurch gekennzeichnet, dass** dem Shunt-Widerstand (16) ein Analog/Digital-Wandler nachgeschaltet ist.

13. Verfahren nach Anspruch 12, **dadurch gekennzeichnet, dass** der Komparator ein Digital-Komparator ist.

## Claims

1. Method for addressing of the participants of a bus system which comprises
- a bus line (12),
- a plurality of participants (1 to 9) connected with the bus line (12), each participant comprising a detector (22) for detecting a current flow between this participant (1 to 9) and a participant (1 to 9) located closest to this participant, a controllable switch (26) for establishing a connection of the bus line (12) with a reference potential, a drive unit (24) for switching on and off the switch (26), inter alia on the basis of the output signal of the detector (22), and an address memory,
wherein in the method
- the drive units (24) of all participants (1 to 9) of the group of participants (1 to 9) not addressed so far switch on the switches (26) for a predeterminable on-period (T),
- within the on-period (T) the switches (26) of those participants (1 to 9) are opened whose detectors (22) detect a current flow to the respective adjacent participant (1 to 9),
- wherein the switch (26) of one of the participants (1 to 9) is still closed upon elapse of the on-period (T), and
- wherein an address is placed into the address memory of this participant (1 to 9), this participant (1 to 9) thus being addressed.

2. The method for addressing of the participants of a bus system according to claim 1, **characterized in that**
- in a first phase a central control unit (14) of the bus system applies to the bus line (12) a closing signal for time-limited closing of the switches (26) of all participants (1 to 9) of the group of participants (1 to 9) not addressed so far for a predeterminable on-period (T),
- in a second phase the detectors (22) determine whether between respective adjacent participants (1 to 9) a current flows or does not flow, wherein
- in said second phase, with the exception of that participant (9) of the group of participants (1 to 9) not addressed so far which is arranged farthest away from the central control unit (14), the detectors (22) of all participants (1 to 9) not addressed so far detect a current flow to the participant (1 to 9) arranged farther away from the central control unit (14) and closest to the respective participant, and consequently, the switches (26) of all participants (1 to 9) not addressed so far are opened, and
- the detector (22) of that participant (9) of the group of participants (1 to 9) not addressed so far, which is arranged farthest away from the central control unit (14), does, during the on-period (T), not detect a current flow to a participant (1 to 9) arranged farther away from the central control unit (14) and closest to the respective participant, and consequently, the switch (26) of this participant (9) not addressed so far is still closed upon elapse of the on-period (T) and is opened only upon elapse of the on-period (T), and
- in a third phase the central control unit (14) applies an address data signal to the bus line (12), wherein said address data signal is stored in the address memory of that participant (9) of the group of participants (1 to 9) not addressed so far whose switch (26) has changed into the open state since the on-period (T) has elapsed, this participant (9) thus being addressed.

3. The method according to claim 2, **characterized in that** for all participants (1 to 9) of the group of participants (1 to 9) not addressed so far addressing takes place in a plurality of addressing cycles.

4. The method according to claim 3, **characterized in that** the on-period (T) is reduced from address cycle to address cycle.

5. The method according to claim 1, **characterized in that** the bus line (12) has connected thereto one or a plurality of central control units (14), and that at least one of these central control units (14) initiates closing of the switches (26) of all participants (1 to 9) of the group of participants (1 to 9) not addressed so far.

6. The method according to claim 1 or 5, **characterized in that** the drive units (24) of all participants (1 to 9), for the purpose of synchronizing the closing process of the switches (26) for the duration of the on-period (T), close the switches (26) of all participants (1 to 9) within a predeterminable period and then open them again, wherein opening of the last switch (26) is recognized and this point of time is the starting period for the address allocation.

7. The method according to any one of claims 1 to 6, **characterized in that** the detectors (22) are connected in series in the bus line (12), and that the switch (26) of each participant (1 to 9) is arranged in a connecting line (28) which branches off the bus line (12) in front of the detector (22) of this participant (1 to 9) as seen from the central control unit (14).

8. The method according to any one of claims 1 to 6, **characterized in that** the detectors (22) and the switches (26) are serially arranged in connecting lines (28) branching off the bus line (12), and that in each connecting line the sensor (22) and the switch (26) of two respective adjacent participants (1 to 9) are arranged, wherein the detector (22) is associated with one participant (1 to 9) and the switch is associated with a participant (1 to 9) farther away from the central control unit (14).

9. The method according to any one of claims 1 to 8, **characterized in that** the participant (9) connected to the bus line (12) at a location farthest away from the central control unit (14) does not comprise a detector.

10. The method according to any one of claims 1 to 9, **characterized in that** each detector comprises a shunt resistor (16) and a comparator (18) for comparing the voltage drop (U_{S}) across the shunt resistor with a reference value (V_{ref}).

11. The method according to claim 10, **characterized in that** a preamplifier (20) for amplifying the voltage drop (U_{S}) is arranged in front of the comparator (18).

12. The method according to claim 10 or 11, **characterized in that** an analog-digital converter is arranged behind the shunt resistor (16).

13. The method according to claim 12, **characterized in that** the comparator is a digital comparator.

## Revendications

1. Procédé pour l'adressage des unités nodales d'un système de bus, lequel comporte
- une ligne de bus (12),
- plusieurs unités nodales (1 à 9) connectées à la ligne de bus (12), dont chacune présente un détecteur (22) destiné à détecter une circulation de courant entre cette unité nodale (1 à 9) et l'unité nodale (1 à 9) voisine la plus proche d'elle, un interrupteur (26) commandé, destiné à établir une connexion de la ligne de bus (12) à un potentiel de référence, une unité d'excitation (24) destinée à mettre l'interrupteur (26) dans l'état passant et l'état non passant, entre autres sur la base du signal de sortie du détecteur (22), et une mémoire d'adresse, étant précisé que selon le procédé
- les unités d'excitation (24) de l'ensemble des unités nodales (1 à 9) du groupe d'unités nodales non encore adressées (1 à 9), mettent les interrupteurs (26) dans l'état passant sur un intervalle de temps prédéfinissable (T) de mise dans l'état passant,
- à l'intérieur de l'intervalle de temps (T) de mise dans l'état passant, les interrupteurs (26) de celles des unités nodales (1 à 9), dont les détecteurs (22) détectent une circulation de courant en direction de l'unité nodale (1 à 9) respectivement voisine, sont ouverts,
- l'interrupteur (26) de l'une des unités nodales (1 à 9) étant encore fermé à l'expiration de l'intervalle de temps (T) de mise dans l'état passant et
- une adresse étant déposée dans la mémoire d'adresse de cette unité nodale (1 à 9) et ladite unité nodale (1 à 9) étant ainsi adressée.

2. Procédé pour l'adressage des unités nodales d'un système de bus selon la revendication 1, **caractérisé en ce que**
- un signal de fermeture pour la fermeture, limitée dans le temps, des interrupteurs (26) de l'ensemble des unités nodales (1 à 9) du groupe d'unités nodales non encore adressées (1 à 9), est, dans une première phase, placé sur la ligne de bus (12), sur un intervalle de temps prédéfinissable (T) de mise dans l'état passant, par une unité de commande centrale (14) du système de bus,
- dans une deuxième phase, il est déterminé, par les détecteurs (22), si un courant circule ou non entre des unités nodales (1 à 9) respectivement voisines, sachant que
- à l'intérieur de cette deuxième phase, les détecteurs (22) de l'ensemble des unités nodales non encore adressées (1 à 9), à l'exception de l'unité nodale (9), disposée le plus loin de l'unité de commande centrale (14), du groupe d'unités nodales non encore adressées (1 à 9), détectent une circulation de courant en direction, chaque fois, de l'unité nodale (1 à 9) voisine la plus proche, disposée plus loin vis-à-vis de l'unité de commande centrale (14) et, par suite, les interrupteurs (26) de l'ensemble des unités nodales non encore adressées (1 à 9) sont ouverts et
- que le détecteur (22) de l'unité nodale (9), disposée le plus loin de l'unité de commande centrale (14), du groupe d'unités nodales non encore adressées (1 à 9), ne détecte pas, pendant l'intervalle de temps (T) de mise dans l'état passant, une circulation de courant en direction d'une unité nodale (1 à 9) voisine la plus proche, disposée plus loin vis-à-vis de l'unité de commande centrale (14) et, par suite, l'interrupteur (26) de cette unité nodale non encore adressée (9), est toujours fermé à l'expiration de l'intervalle de temps (T) de mise dans l'état passant et ne s'ouvre qu'après l'expiration de l'intervalle de temps (T) de mise dans l'état passant, et
- un signal de données d'adresse est, dans une troisième phase, placé sur la ligne de bus (12), par l'unité de commande centrale (14), ce signal de données d'adresse étant alors déposé dans la mémoire d'adresse de celle (9) des unités nodales, parmi le groupe d'unités nodales non encore adressées (1 à 9), dont l'interrupteur (26) est passé dans l'état ouvert en raison de l'expiration de la période (T) de mise dans l'état passant, et cette unité nodale (9) est ainsi adressée.

3. Procédé selon la revendication 2, **caractérisé en ce que**, pour l'ensemble des unités nodales (1 à 9) du groupe d'unité nodales non encore adressées (1 à 9), l'adressage se fait en plusieurs cycles d'adressage.

4. Procédé selon la revendication 3, **caractérisé en ce que** la durée de la période (T) de mise dans l'état passant est diminuée d'un cycle d'adressage au suivant.

5. Procédé selon la revendication 1, **caractérisé en ce qu'**une ou plusieurs unités de commande (14) sont connectées à la ligne de bus (12) et **en ce qu'**au moins l'une de ces unités de commande (14) déclenche la fermeture des interrupteurs (26) de l'ensemble des unités nodales (1 à 9) du groupe d'unités nodales non encore adressées (1 à 9).

6. Procédé selon la revendication 1 ou 5, **caractérisé en ce que** les unités d'excitation (24) de l'ensemble des unités nodales (1 à 9), en vue de la synchronisation de la fermeture des interrupteurs (26) sur la durée de l'intervalle de temps (T) de mise dans l'état passant, ferment les interrupteurs (26) de l'ensemble des unités nodales (1 à 9) et les ouvrent ensuite à nouveau, à l'intérieur d'un intervalle de temps prédéfinissable, l'ouverture du dernier interrupteur (26) étant alors décelée et cet instant étant l'instant de départ de l'attribution d'adresse.

7. Procédé selon l'une des revendications 1 à 6, **caractérisé en ce que** les détecteurs (22) sont montés en série dans la ligne de bus (12) et **en ce que** le interrupteur (26) d'une unité nodale respective (1 à 9) est disposé dans un conducteur de connexion (28), qui est dérivé de la ligne de bus (12), en amont du détecteur (22) de cette unité nodale (1 à 9), considéré depuis l'unité de commande centrale (14).

8. Procédé selon l'une des revendications 1 à 6, **caractérisé en ce que** les détecteurs (22) et les interrupteurs (26) sont disposés en série dans des conducteurs de connexion (28) dérivant de la ligne de bus (12) et **en ce que** pour chaque conducteur de connexion, ce sont le détecteur (22) et l'interrupteur (26) de deux unités nodales (1 à 9) voisines respectives qui sont disposés dans celui-ci, le détecteur (22) appartenant alors à une unité nodale (1 à 9) et l'interrupteur à l'unité nodale (1 à 9) située en position plus éloignée vis-à-vis de l'unité de commande centrale (14).

9. Procédé selon l'une des revendications 1 à 8, **caractérisé en ce que** l'unité nodale (9) raccordée à la ligne de bus (12) dans la position la plus éloignée de l'unité de commande centrale (14), ne présente pas de détecteur.

10. Procédé selon l'une des revendications 1 à 9, **caractérisé en ce que** chaque détecteur présente une résistance en dérivation (16) et un comparateur (18) destiné à comparer la chute de tension (Uₛ) aux bornes de la résistance en dérivation à une valeur de référence (V_{ref}).

11. Procédé selon la revendication 10, **caractérisé en ce qu'**en amont du comparateur (18) est monté un pré-amplificateur (20) destiné à amplifier la chute de tension (Uₛ).

12. Procédé selon la revendication 10 ou 11, **caractérisé en ce qu'**en aval de la résistance en dérivation (16) est monté un convertisseur analogique/numérique.

13. Procédé selon la revendication 12, **caractérisé en ce que** le comparateur est un comparateur numérique.
